# EUROPEAN PATENT APPLICATION

(11) **EP 4 660 508 A1**
(43) Date of publication of application: **10.12.2025**
(21) Application number: 24180898.9
(22) Date of filing: 07.06.2024
(51) Int. Cl.: F16L 55/165, D04H 1/4218, D04H 1/52, D04H 1/58, D04H 3/004, D04H 3/115, B32B 1/08, B32B 5/26, B32B 7/09

(54) **CURE IN PLACE PIPE FABRIC**

(71) Applicant: Owens Corning Intellectual Capital, LLC, Toledo, OH 43659 (US)
(72) Inventor: BERTRAND, Chloé, 59700 Marcq en Baroeul (FR); FALZI, Vivien, 73490 La Ravoire (FR)
(74) Representative: Haseltine Lake Kempner LLP

(57) **Abstract**

Described herein is a cure in place pipe (CIPP) fabric for reinforcing pipes, the CIPP fabric comprising: glass fibers; and a stitching yarn. The stitching yarn forms a stitching pattern through the fabric, the stitching pattern forming a zig-zag design on a surface of the CIPP fabric, the zig-zag design formed by a plurality of sections of the stitching yarn. The stitching pattern comprises: a stitch length measured in a stitching direction; a stitch angle α of about 0.285 rad or less; and a fabric piecing density of less than about 14 piercings per cm². The stitch angle α is the angle opposite the stitch length in a rightangled triangle formed by a section of the plurality of sections of stitching yarn of the zig-zag design and the stitch length. The piercing density being the number of passes of the stitching yarn through the fabric per cm² of fabric.

## Description

### Field of the Invention

The present invention relates to cure in place pipe (CIPP) fabrics for producing cure in place pipe (CIPP) liners, pipe liners and uses thereof, in particular the present invention relates to cure in place pipe (CIPP) liners and uses thereof.

### Background

Pipes leak or fail structurally over time and periodically require replacement or repair. Replacing certain pipes, especially underground, such as storm pipes, sewer pipes, or manhole access points, can be extremely difficult and expensive. Accordingly, technologies have been developed to repair pipes in locations that are difficult to access, rather than to physically replace the pipe.

One repair technology involves the use of cure in place pipe (CIPP) liners that can be inserted within old pipes to essentially replace the old pipes. Specifically, cured-in-place pipe liners are known in which a flexible tube, or sock, is used to line the inner diameter of an old pipe. The liner may be constructed on a resin backed lining, or may have resin applied during the initial installation. The liner may be installed from one point of entry to another by one of several known techniques. With the liner in place within the pipe, the resin is cured and the liner essentially becomes a new pipe within the old pipe. The resin may be cured by one of several known techniques, including UV curing. Cure in place pipe liners are cost effective for several reasons, including because access is necessary only at the upstream and downstream ends of the pipe segment to be lined, for example, via manholes.

CIPP liners inserted inside a pipe should have good handleability and also good flexibility to be stretchable and adjustable to the host pipe diameter before cure, and good strength characteristics and adequate stiffness after cure to resist ground settlement or ground movement particularly if the host pipe has lost its required structural integrity. CIPP liners used for the refurbishment of manholes have similar requirements to those used for the refurbishment of other pipes, however refurbishing manholes can be more complicated than refurbishing horizontal pipes. CIPP liners used for the refurbishment of manholes may be improved by providing CIPP fabrics with improvement elongation.

Therefore, there is a need to provide improved fabrics for producing CIPP liners with improved flexibility, including improved elongation, and improved handleability before curing while also having excellent mechanical properties after curing.

### Summary of the Invention

The present inventors seek to provide a cure in place pipe (CIPP) fabric combining excellent flexibility, strength, and practicality (such as handleability).

At its most general, the present invention provides a cure in place pipe (CIPP) fabric for reinforcing pipes, the CIPP fabric comprising:
glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α of about 0.500 rad or less; and
a fabric piecing density of less than about 14 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Accordingly, in a first aspect the present invention provides a cure in place pipe (CIPP) fabric for reinforcing pipes, the CIPP fabric comprising:
glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α of about 0.285 rad or less; and
a fabric piecing density of less than about 14 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

The present inventors have found that providing a fabric comprising reinforcing glass fibers and a stitching yarn forming the stitching pattern in this way provides a fabric exhibiting improved elongation properties along with improved conformability (e.g., improved structural integrity of the fabric). Surprisingly the present inventors have found that the improved elongation properties provided by the CIPP fabrics described herein can be provided without requiring stitching yarn modification such as changing the elasticity of the stitching yarn. Therefore, a CIPP liner produced using this fabric would also be expected to exhibit these pre-cure improved properties together with excellent post-cure mechanical properties.

In a second aspect, the present invention provides a cure in place pipe liner comprising a CIPP fabric described herein.

In a third aspect, the present invention provides a method of repairing a pipe, the method comprising:
providing a cure in place pipe liner as described herein;
impregnating the cure in place pipe liner with a curable resin;
inserting the cure in place pipe liner into a pipe to be repaired; and
curing the curable resin to form a composite pipe.

The glass fibers of the CIPP fabric may be provided in the form of chopped glass fibers. The glass fibers of the CIPP fabric may comprises a non-woven glass fiber veil. The glass fibers of the CIPP fabric may be provided in the form of chopped glass fibers and a non-woven glass fiber veil. The CIPP fabric may be described as comprising glass fibers comprising a non-woven glass fiber veil and reinforcing glass fibers. The reinforcing glass fibers may be selected from chopped glass fibers (for example, oriented chopped glass fibers and/or randomly oriented chopped glass fibers) and continuous glass fibers (for example, oriented continuous glass fibers).

The glass fibers of the CIPP fabric may be provided in the form of a layer selected from: a non-woven glass fiber veil layer; a layer of chopped glass fibers (the layer of chopped glass fibers may be selected from: a layer of oriented chopped glass fibers; a layer of randomly oriented chopped glass fiber and combinations thereof); a layer of continuous glass fibers; and combinations thereof.

The present inventors have found that including a non-woven glass fiber veil in addition to reinforcing glass fibers provides additional advantages by providing an improved surface finish in addition to improved abrasion resistance in CIPP application. Therefore, providing a CIPP fabric as described herein comprising a non-woven glass fiber veil layer (for example, the non-woven glass fiber veil layer forming an outer layer of the CIPP fabric) leads to smooth and consistent surface enhancing both functionality and visual appearance of the fabric.

The glass fibers of the CIPP fabric may be provided as a single layer or multiple layers of the same or different type. The CIPP fabric may comprise a plurality of layers of glass fibers, for example a plurality of layers selected from: a non-woven glass fiber veil layer; a layer of chopped glass fibers (the layer of chopped glass fibers may be selected from: a layer of oriented chopped glass fibers; a layer of randomly oriented chopped glass fiber and combinations thereof); a layer of continuous glass fibers; and combinations thereof.

The term "continuous glass fibers" is used herein to refer to glass fibers/filaments having a length many times longer than the diameter of the fibers/filaments, for example at least about 5000 times longer than the diameter of the fibers/filaments, e.g. at least about 10000 times longer than the diameter of the fibers/filaments. The continuous glass fibers used in the CIPP fabrics described herein may be provided as glass fiber strands (or tows). The continuous glass fibers may be formed by a continuous manufacturing process in which molten glass passes through the holes of a "bushing," the streams of molten glass thereby formed are solidified into filaments/fibers. The continuous glass fibers described herein (e.g. the continuous glass fibers of the first and second fibers) may include a sizing on their surface, e.g. a sizing applied on the glass fibers during formation of the fibers. The sizing can include components such as a film former, lubricant, coupling agent (to promote compatibility between the glass fibers and the resin used to form a composite article comprising the hybrid fabric described herein), etc. that facilitate formation of the glass fibers and/or use thereof in a matrix resin. In some embodiments, the glass fibers of first and/or second fibers include a polyester compatible sizing, an epoxy compatible sizing, a vinylester compatible sizing, or a polyurethane compatible sizing. In some embodiments, the glass fibers of first and/or second fibers include a polyester compatible sizing or an epoxy compatible sizing.

The continuous glass fibers described herein may have a linear mass density in the range of about 50 Tex to about 5000 Tex, for example about 200 Tex to about 4800 Tex, about 300 Tex to about 2500 Tex, about 300 Tex to about 2400 Tex, or about 600 Tex to about 1200 Tex; and the continuous glass fibers of the second fibers have a linear mass density in the range of about 50 Tex to about 10000 Tex, for example about 50 Tex to about 9600 Tex, about 100 Tex to about 5000 Tex, about 200 Tex to about 4800 Tex, about 300 Tex to about 2500 Tex, about 300 Tex to about 2400 Tex, or about 500 Tex to about 1000 Tex.

The term "glass fiber strand" or "glass fiber tow" as used herein, refers to a bundle of continuous glass filaments. In embodiments the glass fiber strands or tows are bundles of untwisted glass filaments. In embodiments, glass fiber strands or glass fiber tows are provided from glass fiber direct rovings. Glass fiber direct rovings are made up of a bundle of continuous untwisted (i.e. substantially parallel, or parallel) glass filaments bonded (as the glass filaments are formed) into a single strand and wound onto a bobbin.

A layer of continuous glass fibers may comprise continuous glass fibers that are arranged side by side and substantially parallel to one another. The CIPP fabric may contain a layer of continuous glass fibers, for example a layer of continuous glass fibers that are arranged side by side and substantially parallel to one another, the continuous glass fibers oriented in a different direction to the stitching direction (for example, the continuous glass fibers may be oriented in a direction angled between 40° and 90° to the stitching direction). The CIPP fabric may contain multiple layers of continuous glass fibers, for example a plurality of layers of continuous glass fibers that are arranged side by side and substantially parallel to one another. Where the CIPP fabric contains multiple layers of continuous glass fibers, the continuous glass fibers within one layer may be different to the orientation of continuous glass fibers in another of the multiple layers of continuous glass fibers. In Examples in which the CIPP fabric comprises a layer or multiple layers of continuous glass fibers, the continuous glass fibers or one or each of the multiple layers may be oriented in a direction different to the stitching direction. For example, when the CIPP fabric comprises multiple layers of continuous glass fibers, the glass fibers of one layer may be oriented in a direction angled between 40° and 90° to the stitching direction and the glass fibers of another layer may be oriented in a direction angled between -40° and -90° to the stitching direction.

The term "chopped glass fibers", for example chopped glass fiber strands, is used herein to refer to continuous glass fibers, for example continuous glass fiber strands, that have been chopped to have a length of less than about 200mm, for example a length of less than about 100mm, for example a length in the range of about 10mm to about 100mm, for example a length in the range of about 10 mm to about 75 mm.

In preferred embodiments, the chopped glass fibers described herein (for example, the chopped glass fibers of the layer of oriented chopped glass fibers and/or the chopped glass fibers of the layer of randomly oriented chopped glass fibers) are in the form of chopped glass fiber strands. The chopped glass fibers strands may have a linear mass density of up to about 150 bundle Tex, for example a linear mass density of up to about 100 bundle Tex, for example up to about 90 bundle Tex. The chopped glass fiber strands may have a linear mass density in the range of about 20 bundle Tex to about 150 bundle Tex, or about 20 bundle Tex to about 100 bundle Tex, or about 30 bundle Tex to about 90 bundle Tex. The term "bundle tex" is used herein, and commonly in the art, to refer to the linear mass density of the glass fiber strands (i.e. bundles of untwisted glass filaments) forming a chopped glass fiber strand layer (it is noted that this "bundle Tex" terminology is used to clarify difference between the linear mass density of the glass fiber yarn (continuous strand having a linear mass density commonly described in the units "Tex") which is chopped to form the chopped glass fiber stands (having a linear mass density commonly described in the units "bundle Tex").

Any suitable glass reinforcing fibers may be employed as the glass fibers described herein, for example, fibers made from E glass, E-CR glass (such as Advantex^{™} glass fibers available from Owens Corning), C glass, H glass, S glass, and AR glass types can be used.

The glass fibers of the CIPP fabric may be provided in an amount of up to about 3000 g/m², for example up to about 2500 g/m². The glass fibers of the CIPP fabric may be provided in an amount in the range of about 300 g/m² to about 3000 g/m², for example about 350 g/m² to about 2500 g/m².

The glass fibers of the CIPP fabric, for example before being formed into a CIPP liner and impregnated with resin, may constitute at least about 60 wt.%, for example at least about 70 wt.%, at least about 80 wt.%, at least about 90 wt.%, or at least about 95 wt.% of the total weight of the CIPP fabric.

The glass fibers of the CIPP fabric may be provided in the form of a non-woven glass fiber veil layer and a layer of chopped glass fibers. The layer of chopped glass fibers may comprise, consist essentially of, or consist of a layer of oriented chopped glass fibers and/or a layer of randomly oriented chopped glass fibers. The glass fibers of the CIPP fabric may be provided in the form of a non-woven glass fiber veil layer; a layer of oriented chopped glass fibers; and a layer of randomly oriented chopped glass fibers. The non-woven glass fiber veil layer of the CIPP fabric, where present, may form an outer layer of the CIPP fabric. The layer of oriented chopped glass fibers may comprise chopped glass fibers oriented substantially parallel to the stitching direction. The oriented chopped glass fibers may have a fiber length of up to about 200mm, for example up to about 150mm, or up to about 100 mm, for example a fiber length in the range of about 10mm to about 150mm, for example a fiber length in the range of about 50 mm to about 100 mm. The randomly oriented chopped glass fibers may have a fiber length of up to about 200mm, for example up to about 150mm, or up to about 100 mm, for example a fiber length in the range of about 10mm to about 150mm, for example a fiber length in the range of about 50 mm to about 100 mm. The layer of chopped glass fibers may comprise, consist essentially of, or consist of chopped glass fibers as described above. The layer of chopped glass fibers may have an areal weight of up to about 2400 g/m², for example in the range of about 250 g/m² to about 2400 g/m², about 250 g/m² to about 2200 g/m², or about 250 g/m² to about 2000 g/m². The areal weight of the layer of chopped glass fibers may be determined according to ISO 3374. The layer of oriented chopped glass fibers may comprise, consist essentially of, or consist of chopped glass fibers as described above. The layer of oriented chopped glass fibers may have an areal weight of up to about 1500 g/m², for example an areal weight in the range of about 200 g/m² to about 1500 g/m², or about 200 g/m² to about 1000 g/m². The areal weight of the layer of oriented chopped glass fibers may be determined according to ISO 3374. The layer of randomly oriented chopped glass fibers may comprise, consist essentially of, or consist of chopped glass fibers as described above. The layer of randomly oriented chopped glass fibers may have an areal weight of up to about 800 g/m², for example an areal weight in the range of about 100 g/m² to about 800 g/m², or about 100 g/m² to about 600 g/m². The areal weight of the layer of randomly oriented chopped glass fibers may be determined according to ISO 3374.

The term "substantially parallel" is used herein to refer to a direction of ±10°, for example ±5°, ±2°, ±1°, or about 0°, to a given reference direction, for example to the stitching direction.

The term "substantially perpendicular" is used herein to refer to a direction of ±80°, for example ±85°, ±88°, ±89°, or about 90°, to a given reference direction, for example to the stitching direction, the length of the fabric or the axis of a pipe.

The glass fibers of the CIPP fabric may be provided in the form of a non-woven glass fiber veil layer and a layer of chopped glass fibers. The non-woven glass fiber veil layer may comprise, consist essentially of, or consist of randomly oriented glass fibers and a binder to bind the randomly oriented glass fibers together. The glass fibers of the non-woven glass fiber veil layer may have a fiber length of up to about 200mm, for example up to about 100mm, for example a fiber length in the range of about 5mm to about 100mm, for example a fiber length in the range of about 5 mm to about 75 mm. The non-woven glass fiber veil layer may have an areal weight in the range of about 20 g/m² to about 150 g/m², for example in the range of about 20 g/m² to about 100 g/m². The areal weight of the non-woven glass fiber veil layer may be determined according to ISO 3374.

The glass fibers of the CIPP fabric may be provided in the form of a non-woven glass fiber veil layer and a layer of chopped glass fibers as described herein. The CIPP fabric may comprise a non-woven glass fiber veil layer; and a layer of oriented chopped glass fibers and/or a layer of randomly oriented chopped glass fibers. The CIPP fabric may comprise a layer of chopped glass fibers, for example a layer of oriented chopped glass fibers or a layer of randomly oriented chopped glass fibers, directly disposed on the non-woven glass fiber veil layer. The CIPP fabric may comprise a layer of oriented chopped glass fibers, a layer of randomly oriented chopped glass fibers, and a non-woven glass fiber veil layer, wherein the layer of oriented chopped glass fibers or the layer of randomly oriented chopped glass fibers is disposed directly on the non-woven glass fiber veil layer. The CIPP fabric may comprise a layer of oriented chopped glass fibers, a layer of randomly oriented chopped glass fibers, and a non-woven glass fiber veil layer, wherein the layer of oriented chopped glass fibers is disposed directly on the non-woven glass fiber veil layer, and the layer of randomly oriented chopped glass fibers is disposed directly on the layer of oriented chopped glass fibers. The zig-zag design of the stitching pattern formed on a surface of the CIPP fabric may be formed on a non-woven glass fiber veil layer.

The CIPP fabric described herein comprises, consists essentially of, or consists of glass fibers and a stitching yarn as described herein.

Any suitable stitching yarn may be employed. In embodiments, the stitching yarn is a polyester yarn, for example a PET yarn. The stitching yarn may have a linear mass density in the range of about 50 dTex to about 300dTex.

The stitching yarn of the CIPP fabric forms a stitching pattern through the fabric, the stitching pattern forming a zig-zag design on a surface of the CIPP fabric, for example on the surface of the glass fibers of the CIPP fabric, the zig-zag design formed by a plurality of sections of the stitching yarn. Suitable stitching patterns forming a zig-zag design on a surface of the CIPP fabric include tricot stitching patterns, including double and triple tricot stitching patterns. The stitching pattern may be a symmetric or an asymmetric stitching pattern.

The stitching pattern comprises: a stitch length measured in a stitching direction; a stitch angle α which is the angle opposite the stitch length in a right-angled triangle formed by a section of the plurality of sections stitching yarn of the zig-zag design and the stitch length; and a fabric piecing density being the number of passes of the stitching yarn through the fabric per cm² of fabric. The piecing density can also be described as the number of holes per cm² formed through the fabric by a needle(s) used to form the stitching pattern. The stitch length is the length measured in the stitching direction of one stitch forming the stitching pattern, the stitch length may be in the range of about 1 mm to about 20 mm, for example about 1 mm to about 15 mm. about 1 mm to about 10 mm, about 1 mm to about 8 mm, about 1 mm to about 6 mm, about 1 mm to about 5 mm, about 1 mm to about 4 mm, about 1 mm to about 3 mm, or about 2 mm to about 3 mm. The stitch angle α may be up to about 0.500 rad, for example up to about 0.300 rad, up to about 0.285 rad, up to about 0.250 rad, up to about 0.225 rad, up to about 0.200 rad, up to about 0.180 rad. The stitch angle α may be in the range of about 0.050 rad to about 0.500 rad, for example about 0.050 rad to about 0.300 rad, about 0.050 rad to about 0.285 rad, about 0.75 rad to about 0.285 rad, about 0.100 rad to about 0.285 rad, about 0.125 rad to about 0.250 rad, about 0.125 rad to about 0.225 rad, about 0.150 rad to about 0.200 rad, or about 0.150 rad to about 0.180 rad. The fabric piercing density may be up to about 14 piercings per cm², for example up to about 12 piercings per cm², or up to about 10 piercings per cm². The fabric piercing density may be in the range of about 1 to about 14 piercings per cm², for example about 2 to about 12 piercings per cm², or about 2 to about 10 piercings per cm². The present inventors have found that the stitching pattern having the combination of a stitch length in the range of about 1 mm to about 20 mm, stitch angle α of about 0.285 rad or less, and a fabric piercing density of up to about 14 piercings per cm², or narrower ranges thereof as described above, provides particularly improved benefits in relation to providing a fabric exhibiting improved elongation properties along with improved conformability in addition to retention of mechanical properties such as strength retention.

The invention includes the combination of the aspects and features described herein except where such a combination is clearly impermissible or expressly avoided.

### Brief Description of the Figures

Embodiments and experiments illustrating the principles of the invention will now be discussed with reference to the accompanying figures in which:
Figure 1 shows an annotated photograph of an Example of a CIPP fabric as described herein;
Figure 2 shows an annotated photograph of a Comparative Example of a CIPP fabric; and
Figure 3 is a graph showing the tensile strength in the 0° direction of the CIPP fabrics of Example 1 and Comparative Examples 2 to 4.

### Detailed Description

Aspects and embodiments of the present invention will now be discussed with reference to the accompanying figures. Further aspects and embodiments will be apparent to those skilled in the art. All documents mentioned in this text are incorporated herein by reference.

Described herein is a cure in place pipe (CIPP) fabric for reinforcing pipes, the CIPP fabric comprising, consisting essentially of, or consisting of glass fibers and a stitching yarn, the glass fibers and the stitching yarn being as described herein.

The stitching yarn of the CIPP fabric forms stitching pattern through the fabric. The stitching pattern forms a zig-zag design on a surface of the CIPP fabric, the zig-zag design formed by a plurality of sections of the stitching yarn on a surface of the CIPP fabric. The stitching pattern comprises: a stitch length measured in a stitching direction; a stitch angle α, α being the angle opposite the stitch length in a right-angled triangle formed by a section of the plurality of sections of stitching yarn of the zig-zag design and the stitch length of the section of stitching yarn; and a fabric piercing density, the fabric piercing density being the number of passes of the stitching yarn through the fabric per cm² of fabric. The stitch length, stitch angle α, and piercing density having values and/or ranges as described herein.

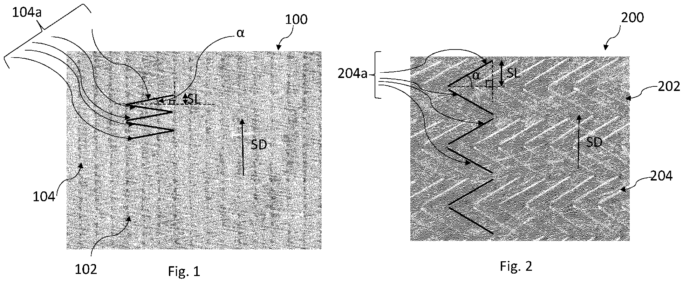

Figure 1 shows an annotated picture of a CIPP fabric 100 as described herein, for Example the CIPP fabric of Example 1 described herein. The CIPP fabric 100 comprises glass fibers 102 and a stitching yarn 104. The stitching yarn 104 forms a stitching pattern forms a zig-zag design on a surface of the CIPP fabric, the zig-zag design formed by a plurality of sections 104a of the stitching yarn 104 on a surface of the CIPP fabric 100. The stitching pattern comprises: a stitch length (SL) measured in a stitching direction (SD); a stitch angle α. Figure 1 shows a right-angled triangle formed by a section 104a of the plurality of sections of stitching yarn 104 and the stitch length (SL) of the section 104a of stitching yarn, in which stitch angle α is the angle opposite the stitch length in the right-angled triangle. In a right-angled triangle formed by a section 104a of the stitching yarn 104 and the stitch length (SL) of the section 104a of stitching yarn, the section 104a of stitching yarn 104 can be described as the hypotenuse side of the right-angled triangle, the stitch length (SL) as the opposite side, with the adjacent side of the right-angled triangle forming an angle α with the hypotenuse side (104a). The fabric piercing density is determined as number of passes of the stitching yarn through the fabric, i.e. through the glass fibers or glass fiber layers of the fabric, per cm² of fabric.

In the embodiment shown in figure 1, the stitch pattern is a symmetric stitch pattern and the angle between adjacent sections 104 a of stitching yarn forming the zig-zag design is 2α.

Figure 2 shows an annotated picture of a CIPP fabric 200 of the prior art. The CIPP fabric 200 comprises glass fibers 202 and a stitching yarn 204. The stitching yarn 204 forms a stitching pattern forms a zig-zag design on a surface of the CIPP fabric, the zig-zag design formed by a plurality of sections 204a of the stitching yarn 204 on a surface of the CIPP fabric 200. The stitching pattern comprises: a stitch length (SL) measured in a stitching direction (SD); a stitch angle α. Figure 2 shows a right-angled triangle formed by a section 204a of the plurality of sections plurality of sections 204a of stitching yarn 204 and the stitch length (SL) of the section 204a of stitching yarn, in which stitch angle α is the angle opposite the stitch length in the right-angled triangle. In the CIPP fabric shown in figure 2, the stitch angle α is greater than 0.500.

Described herein is a cure in place pipe (CIPP) fabric for reinforcing pipes, the CIPP fabric comprising:
glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad, or in the range of about 0.020 rad to about 0.200 rad; and
a fabric piecing density of less than about 14 piercings per cm²,
   wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad, or in the range of about 0.020 rad to about 0.200 rad; and
a fabric piecing density in the range of about 1 to about 12 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad, or in the range of about 0.020 rad to about 0.200 rad; and
a fabric piecing density in the range of about 1 to about 10 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad, or in the range of about 0.020 rad to about 0.200 rad; and
a fabric piecing density in the range of about 1 to about 12 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad, or in the range of about 0.020 rad to about 0.200 rad; and
a fabric piecing density in the range of about 1 to about 10 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad, or in the range of about 0.020 rad to about 0.200 rad; and
a fabric piecing density in the range of about 1 to about 12 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α of about 0.285 rad or less; and
a fabric piecing density in the range of about 1 to about 10 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α of about 0.285 rad or less; and
a fabric piecing density in the range of about 1 to about 12 piercings per cm²,
wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric,
wherein the reinforcing glass fibers comprise randomly oriented chopped glass fibers, oriented chopped glass fibers, oriented continuous glass fibers, or any combination thereof.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α of about 0.285 rad or less; and
a fabric piecing density in the range of about 1 to about 12 piercings per cm²,
   wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric,
   wherein the reinforcing glass fibers comprise randomly oriented chopped glass fibers, oriented chopped glass fibers, or combinations thereof.

Described herein is a cure in place pipe (CIPP) fabric for reinforcing pipes, the CIPP fabric comprising:
glass fibers comprising a non-woven glass fiber veil and reinforcing glass fibers; and
a stitching yarn,
wherein the stitching yarn forms a stitching pattern through the fabric, the stitching pattern forming a zig-zag design on a surface of the CIPP fabric, the zig-zag design formed by a plurality of sections of the stitching yarn, the stitching pattern comprising:
a stitch length measured in a stitching direction;
a stitch angle α is in the range of about 0.020 rad to about 0.250 rad; and
a fabric piecing density in the range of about 1 to about 12 piercings per cm²,
   wherein the stitch angle α is the angle opposite the stitch length in a right-angled triangle formed by a section of the plurality of sections of stitching yarn of the zig-zag design and the stitch length, and the piercing density being the number of passes of the stitching yarn through the fabric per cm² of fabric,
wherein the reinforcing glass fibers comprise randomly oriented chopped glass fibers, oriented chopped glass fibers, or combinations thereof.

Also described herein is A cure in place pipe liner comprising a CIPP fabric described herein.

The CIPP fabric of the cure in place pipe liner may be impregnated with a curable resin, for example a UV curable resin or a thermally curable resin. Suitable curable resins include epoxy resins, polyester resins and vinyl ester resins. In embodiments the curable resin may be a UV curable polyester resin.

The total fiber weight of the liner may be in the range from about 35 wt.% to about 70 wt.% of the resin impregnated CIPP liner.

The CIPP liner may comprise a plurality of layers of a CIPP fabric described herein, for example the CIPP liner may comprise at least 2 or at least 3 layers of a CIPP fabric described herein, the layers disposed directly on one another. The CIPP liner may be formed by winding layers of CIPP fabric disposed on one another around a mandrel such that the length of the fabric (the 0° direction) is substantially transverse to the length of the CIPP liner.

Also described herein is a method of repairing a pipe, the method comprising:
providing a CIPP liner as described herein;
impregnating the CIPP liner with a curable resin, for example a UV curable resin;
inserting the CIPP liner into a pipe to be repaired; and
curing the curable resin to form a composite pipe.

Suitable curable resins include epoxy resins, polyester resins and vinyl ester resins. In embodiments the curable resin may be a UV curable polyester resin.

In embodiments, the curable resin is a UV curable resin and curing the resin comprises exposing the resin to UV radiation.

### Examples

The following illustrates examples of the compositions and related aspects described herein. Thus, these examples should not be considered to restrict the present disclosure, but are merely in place to teach how to make examples of compositions of the present disclosure.

### Example 1

A CIPP fabric was provided consisting of multiple layers of reinforcing glass fibers and a stitching yarn. The multiple layers of reinforcing glass fibers consisted of a non-woven glass fiber veil layer comprising glass fibers bound together with a chemical binder (areal weight of non-woven glass fiber veil layer was 30 g/m²), a layer of oriented chopped glass fibers oriented parallel to the length of the fabric being formed and also parallel to the stitching direction (SD) (areal weight of the layer of oriented chopped glass fibers was 400 g/m²), a layer of randomly oriented chopped glass fibers (areal weight of the layer of randomly oriented chopped glass fibers was 295 g/m²), and a polyester stitching yarn (80 dTex PET yarn). The CIPP fabric was formed in which the layer of oriented chopped glass fibers was disposed directly on the non-woven glass fiber veil layer, and the layer of randomly oriented chopped glass fibers was disposed directly on the layer of oriented chopped glass fibers, the polyester stitching yarn forming a stitching pattern through the multiple layers of reinforcing glass fiber fabric to form a zig-zag design on the surface of the CIPP fabric, in this case on the surface of the non-woven glass fiber veil layer of the CIPP fabric.

In this Example 1, the stitching pattern was a tricot stitching pattern having a stitch angle α of 0.175 rad, a stitch length of 2.25 mm and a fabric piercing density of 9.4 piercings/cm². Figure 1 shows an annotated photograph of the CIPP fabric of Example 1.

### Comparative Example 2

A CIPP fabric was produced according to Example 1 except that the stitching pattern was a tricot stitching pattern having a stitch angle α of 0.534 rad, a stitch length of 5 mm and a fabric piercing density of 4.7 piercings/cm². Figure 2 shows an annotated photograph of the CIPP fabric of Comparative Example 2.

### Comparative Example 3

A CIPP fabric was produced according to Example 1 except that the stitching pattern was a tricot stitching pattern having a stitch angle α of 0.287 rad, a stitch length of 2.5 mm and a fabric piercing density of 9.4 piercings/cm².

### Comparative Example 4

A CIPP fabric was produced according to Example 1 except that the stitching pattern was a tricot stitching pattern having a stitch angle α of 0.175 rad, a stitch length of 1.5 mm and a fabric piercing density of 15.7 piercings/cm².

The only difference between the CIPP fabrics produced in Example 1 and the Comparative Examples was the specific stitching pattern used as described above.

### Testing and Conclusions

The mechanical performance of each of the CIPP fabrics of Example 1 and Comparative Examples 2-4 were tested using a tensile test in which a load was applied to samples of the prepared CIPP fabrics (the fabrics as produced with no resin impregnation) to stretch the fabrics along their length (the 0° direction). Each of the fabric samples tested had the same size, the only difference between each of the fabrics was the stitching patter as described above.

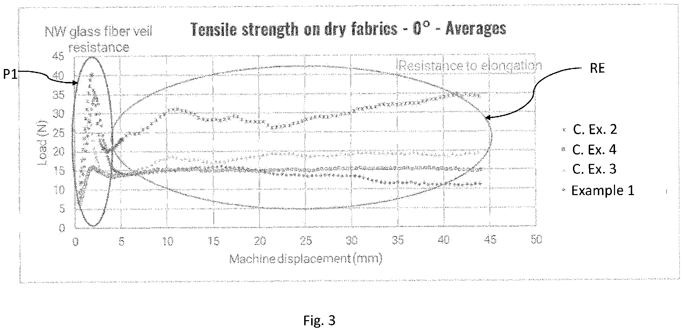

The mechanical testing was conducted using CIPP fabric samples sizes of 300 × 50 mm. A sample was clamped between jaws separated by 200 mm with a preload of 5 N. The jaws were then separated (machine displacement) at a tensile speed of 20 mm/mm to stretch the fabric samples. The results are provided in the graph shown in figure 3.

The graph shown in figure 3 shows the average (determined by testing 5 samples of each fabric) load applied to each of the CIPP fabric samples of Example 1 and Comparative Examples 2-4 against machine displacement as the samples were stretched along their length. As can be seen from figure 3, the tensile tests resulted in a first peak (at less than about 5 mm displacement) which indicates failure of the non-woven veil. As discussed above, the non-woven veil comprises a binder which binds the glass fibers together. The non-woven veil is considered to be rigid, and the first peaks (P1) shown in figure 3 indicates the mechanical constraint of the non-woven veil. An advantage of inclusion of a non-woven veil as described herein in the CIPP fabric is the surface smoothness provided by the non-woven veil which provides protection of the pipe from abrasion in the final application. The present inventors believe, that after the binder links in the non-woven veil are broken (first peak P1), the stitching yarn then takes the load as the fabrics are stretched further. Therefore, after the first peak P1, the data provided in figure 3 indicates the CIPP fabrics resistance to elongation (area marked RE).

Table 1 below provides a summary of the CIPP fabrics and the test data.

**Table 1**

| CIPP fabric | stitch angle α [rad] | stitch length [mm] | Piercing density [cm⁻²] | Load at first break (P1) [N] | Load required to extend to 40 mm [N] |
|---|---|---|---|---|---|
| Ex. 1 | 0.175 | 2.25 | 9.4 | 36 | 11 |
| C. Ex. 2 | 0.534 | 5.0 | 4.7 | 42 | 35 |
| C. Ex. 3 | 0.287 | 2.5 | 9.4 | 29 | 20 |
| C. Ex. 4 | 0.175 | 1.5 | 15.7 | 17 | 15 |

From figure 3 and table 1 it can be seen that the CIPP fabric having the highest piercing density (Comparative Example 4) has the lowest first break point (P1) which indicates that this CIPP fabric has lower structural integrity than the other CIPP fabric samples. The inventors believe that the higher piercing density of this CIPP fabric detrimentally impacts the integrity of the non-woven veil layer. So, although the fabric of Comparative Example 4 exhibits low resistance to elongation (RE), which is believed to be linked to the stitch angle α being below 0.300 rad, the fabric lacks structural integrity.

From figure 3 and table 1 it can be seen that the CIPP fabric having the lowest piercing density (Comparative Example 2) has the highest first break point (P1) which indicates that this CIPP fabric has high structural integrity. However, with this low piercing density, the stitch angle α of the CIPP fabric of Comparative Example 2 is over 0.500 rad which appears to lead to the sample exhibiting high resistance to elongation. Even if Comparative Example 4 exhibits low resistance to elongation (RE), the fabric lacks structural integrity.

Comparing the CIPP fabrics of Example 1 and Comparative Example 3, from figure 3 it can be seen that the CIPP fabric samples of Example 1 exhibit improved structural integrity (around 45% improvement compared to the fabrics of Comparative Example 3) as well as improved elongation compared to the samples of the CIPP fabrics of Comparative Example 3.

Therefore, the present inventors have found that the CIPP fabric described herein exhibit improved elongation properties along with improved fabric structural integrity. The remarkable tensile elongation of the CIPP fabrics described herein along with their excellent structural integrity, due to the stitching pattern design, ensures that the CIPP fabrics are robust enough to maintain their structural shape for excellent handling and processing while becoming stretchable when required. The present inventors expect that a CIPP liner produced using the fabrics described herein would also be expected to exhibit these pre-cure improved properties together with excellent post-cure mechanical properties.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A cure in place pipe (CIPP) fabric (100) for reinforcing pipes, the CIPP fabric comprising:
glass fibers (102); and
a stitching yarn (104),
wherein the stitching yarn forms a stitching pattern through the fabric, the stitching pattern forming a zig-zag design on a surface of the CIPP fabric, the zig-zag design formed by a plurality of sections (104a) of the stitching yarn (104), the stitching pattern comprising:
a stitch length (SL) measured in a stitching direction (SD);
a stitch angle α of about 0.285 rad or less; and
a fabric piecing density of less than about 14 piercings per cm²,
wherein the stitch angle α is the angle opposite the stitch length (SL) in a right-angled triangle formed by a section (104a) of the plurality of sections of stitching yarn of the zig-zag design and the stitch length (SL), and the piercing density being the number of passes of the stitching yarn through the fabric per cm² of fabric.

2. A CIPP fabric according to claim 1, wherein the fabric piercing density is in the range of about 1 piercing per cm² to about 12 piercings per cm².

3. A CIPP fabric according to claim 1 or claim 2, wherein the stitch angle α is in the range of about 0.020 rad to about 0.250 rad.

4. A CIPP fabric according to any of the preceding claims, wherein the stitch length is in the range of about 1 mm to about 20 mm.

5. A CIPP fabric according to any of the preceding claims, wherein the CIPP fabric is a multilayer fabric and the stitching yarn forms a stitching pattern through the multilayer fabric.

6. A CIPP fabric according to any of the proceeding claims, wherein the glass fibers of the CIPP fabric comprise a plurality of layers of glass fibers.

7. A CIPP fabric according to any of the preceding claims, wherein the glass fibers of the CIPP fabric are provided in the form of a layer selected from: a non-woven glass fiber veil layer; a layer of chopped glass fibers; a layer of continuous glass fibers; and combination thereof.

8. A CIPP fabric according to claim 7, wherein the layer of chopped glass fibers is selected from: a layer of oriented chopped glass fibers; a layer of randomly oriented chopped glass fiber and combinations thereof.

9. A CIPP fabric according to any of the preceding claims, wherein the glass fibers comprise a non-woven glass fiber veil and reinforcing glass fibers.

10. A CIPP fabric according to claim 9, wherein the non-woven glass fiber veil has an areal weight in the range of about 20 g/m² to about 150 g/m².

11. A CIPP fabric according to claim 9 or claim 10, wherein the reinforcing glass fibers comprise randomly oriented chopped glass fibers, oriented chopped glass fibers, oriented continuous glass fibers, or any combination thereof.

12. A CIPP fabric according to claim 11, wherein the oriented chopped glass fibers comprise chopped glass fibers oriented substantially parallel to the stitching direction.

13. A CIPP fabric according to any of the preceding claims, wherein the glass fibers have an areal weight in the range of about 300 g/m² to about 3000 g/m².

14. A cure in place pipe liner comprising a CIPP fabric according to any of claims 1 to 13.

15. A cure in place pipe liner according to claim 14, wherein the CIPP fabric comprises:
a non-woven glass fiber veil layer;
a layer of oriented chopped glass fibers; and
a layer of randomly oriented chopped glass fibers,
the non-woven glass fiber veil layer being oriented inwardly of the chopped glass fiber layers in use.

16. A method of repairing a pipe, the method comprising:
providing a cure in place pipe liner according to claim 14 or 15;
impregnating the cure in place pipe liner with a curable resin;
inserting the cure in place pipe liner into a pipe to be repaired; and
curing the curable resin to form a composite pipe.
